# EUROPEAN PATENT SPECIFICATION

(11) **EP 0 797 513 B1**
(45) Date of publication and mention of the grant of the patent: **03.07.2002**
(21) Application number: 95944094.2
(22) Date of filing: 08.12.1995
(51) Int. Cl.: B60C 5/01, B60C 5/02, B60C 7/12, B60C 29/00, A63C 17/22

(54) **PNEUMATIC IN-LINE SKATE WHEEL**
PNEUMATISCHES RAD FÜR EINSPURIGEN ROLLSCHUH
ROUE PNEUMATIQUE POUR PATINS A ROULETTES EN LIGNE

(30) Priority: 12.12.1994 US 354374; 14.07.1995 US 502828
(43) Date of publication of application: 01.10.1997
(73) Proprietor: The Hyper Corporation, Santa Ana, CA 92704 (US)
(72) Inventor: Peterson, Tom, Huntington Beach,California 92649 (US); Piper, Neal, Huntington Beach,California 92649 (US)
(74) Representative: Mayes, Stuart David
(86) International application number: PCT/US95/16160
(87) International publication number: WO 96/18513

(56) References cited:
- US-A- 495 064
- US-A- 988 533
- US-A- 1 981 720
- US-A- 2 262 714
- US-A- 3 877 710
- US-A- 4 310 042
- US-A- 4 379 104
- US-A- 4 387 071
- US-A- 5 312 844
- US-A- 5 346 231

## Description

### BACKGROUND OF THE INVENTION

### Field of the Invention

The invention relates to in-line roller skates and more particularly to a pneumatic in-line skate wheel of integral construction.

### Description of the Prior Art

In-line roller skating combines the excitement of ice skating with the mobility of running. Enabling recreational access to a wide variety of surfaces, the sport allows an individual to traverse sidewalks, roads, and other rollable surfaces. In-line skating owes its name to the wheel configuration of the skate itself. Arranged longitudinally one behind the other, the wheels rotate in the same longitudinally oriented vertical plane, creating an experience similar to ice skating, where the blade resides in one longitudinal plane. Because skates of this type are used by skaters with a wide variety of proficiency and are employed to skate over surfaces varying from the even finished surface of new concrete to the highly irregular and cracked surfaces associated with older sidewalks and streets. For skaters of varying weight and skills skating over a varying array of surfaces, the resistance to the free rolling of the tires will vary across a broad range.

Tire rotation is the result of friction acting rearwardly at the tangent point of contact between the tire and support surface. The frictional force inhibits the tire from sliding forwardly on the surface thus causing the tire to roll. The magnitude of a frictional force is generally material dependent and proportional to the weight bearing down upon the point of contact. From a performance perspective, friction can be both an asset and a liability. As a positive characteristic, an increase in friction allows a tire to grip a surface more easily, enabling sharper cornering and wet weather use. On the negative side, an increase in friction equates to less speed along a surface. Therefore, it can be seen that a tire capable of adjustably influencing the amount of friction acting on it offers a user flexibility within the tire's performance spectrum.

Although speed and gripping capability are important performance characteristics for an in-line skating wheel, shock absorption is also an important criterion. Energy absorbed by a tire as a result of traversing bumps or rocks reduces the shock transmitted to a users knees, thus avoiding a potentially dangerous situation. Skate wheels currently on the market exhibit a certain amount of resiliency within the tire such that a predetermined amount of cushioning or shock absorption is available. However, the degree of cushioning is typically solely dependent on the resiliency of the urethane employed in the tire body and the radial thickness of that urethane. Therefore, the need exists for an improved skate wheel which is of durable construction and will provide cushioning and shock absorption having characteristics different than that offered by urethane. It is also desirable that such a tire offer an adjustable level of shock absorption protection for individuals of different weights and sizes.

U.S. 5,312,844 describes a method of producing injection moulded in-line skate wheels. The method includes heating an injection moulding unit suitable for injecting molten polyurethane, placing a thermoplastic polyurethane into the unit and heating the polyurethane until it is molten or at about 190°C (380°F) to about 240°C (460°F). The polyurethane is placed in a mould whereby the mould hub are of shapes and sizes suitable for producing in-line skate wheels.

### SUMMARY OF THE INVENTION

A hard, polyurethane hub formed with a pair of axially spaced retainer flanges which together form a drop-center. Received within the hub drop-center is a self distended annular hermetic bladder. Radially encapsulating the bladder and the hub periphery is an elastomeric tire comprised of a material similar to that of the hub but typically somewhat more resilient. In one embodiment, the radially formed tire further includes a tubular passage allowing access to the bladder. A highly resilient elastomeric tubular valve may be sealably inserted into the passage, with one end penetrating the bladder and the other end slightly extruding from the tire exterior surface. Due to the valve's resiliency with respect to the harder tire, the central portion of the valve is compressed together forming an airtight seal. A pressurising device may access the valve port to inflate or deflate the bladder, causing a corresponding increase or decrease in the resiliency of the tire.

The wheel is fabricated by incorporating open cast molding techniques into the assembly thereof. First, the bladder is looped into the hub drop-center and centered within an annular array of locator nipples. The resulting hub sub-assembly is placed into a mold having an ellipsoidal cavity corresponding to the eventual shape of the tire. In one embodiment, the mold includes a removable axially extending frusto conical needle to form the valve passageway within the tire to be formed. Once enclosed within the mold, high temperature liquid urethane is introduced, filling the ellipsoidal cavity enclosing the bladder and hub drop-center area. The exothermic curing process heats the air within the bladder causing it to expand thus distending the walls of such bladder causing it to more firmly grip the drop center to cooperate in holding such bladder centered as the curing process continues. The bladder is preferably also of polyurethane material to also chemically bond to the tire body to cooperate in forming a structurally integral system. The compatibility of the hub material and the tire material causes the high temperature urethanes to form a virtually unbreakable bond between the tire and hub flanges during the curing process. Following the curing process, the bladder may be punctured and a tubular valve inserted into the passage created by the mold needle.

In one embodiment, the skate wheel of the present invention includes a somewhat triangular in cross section core in the form of a bladder and a poppet style pneumatic valve. The valve includes a rigid valve barrel terminating at its distal end in a distally facing annular poppet seat and formed medially with an annular groove to be received in close fit relation in a bore formed in the wall of the bladder. A valve core mounts in the barrel and includes at its distal end a resiliently drawn and releasable poppet in sealing engagement with the poppet seat to control fluid flow to the bladder air chamber. The core is formed with a blind axial bore opening to the proximal end of the barrel and joining distally with a laterally formed cross throughbore to establish fluid communication to the interior of the bladder. To inflate, an inflation needle is inserted through the axial bore to drive against the back side of the poppet to deform the resilient core to re-align the cross bore with the axial bore and distend the poppet upwardly and outwardly from the barrel seat to allow the needle to fluidly communicate with the bladder.

In a third embodiment of the skate wheel of the present invention, the tire body encases an annular extruded thermo resilient core formed with a plurality of individually sealed plastic polyurethane annular air chambers disposed substantially about a common axis to define a cushion.

Other features and advantages of the invention will become apparent from the following detailed description, taken in conjunction with the accompanying drawings, which illustrate, by way of example, the features of the invention.

### BRIEF DESCRIPTION OF THE DRAWINGS

FIG. 1 is a perspective view of an in-line roller skate wheel of the present invention;
FIG. 2 is a perspective view of a hub incorporated in the skate wheel shown in FIG. 1;
FIG. 3 is an enlarged transverse sectional view taken along line 3-3 of FIG. 1;
FIG. 4 is a further enlarged partial sectional view taken along line 4-4 of FIG. 3;
FIG. 5 is a further enlarged partial sectional view taken along line 5-5 of FIG. 3;
FIG. 6 is a block diagram illustrating a preferred method of manufacturing the skate wheel shown in FIG. 1;
FIG. 7 is a cross sectional view, in enlarged scale, of the hub included in the wheel shown in FIG. 1 as nested in a mold;
FIG. 8 is a cross sectional view similar to FIG. 7 but showing the tire molded on the hub;
FIG. 9 is a longitudinal sectional view of a valve barrel incorporated in a second embodiment of the roller skate wheel of the present invention;
FIG. 10 is a longitudinal sectional view of a valve core to be fixedly mounted in the barrel shown in FIG. 9;
FIG. 11 is a partial transverse sectional view, in reduced scale, of the second embodiment of the skate wheel incorporating the valve constructed from the barrel and core of FIGS. 9 and 10;
FIG. 12 is a cross sectional view similar to FIG. 11 illustrating the alternative valve in an open position;
FIG. 13 is a partial perspective view, partially in section, of the valve shown in FIG. 12; and
FIG. 14 is a partial transverse sectional view of a third embodiment of the skate wheel of the present invention.

### DETAILED DESCRIPTION OF THE PREFERRED EMBODIMENTS

Currently available in-line roller skate wheels generally comprise a hard plastic hub surrounded by a tough polyurethane tire body. Various flanging arrangements exist to help keep the tire from breaking away from the hub and exposing the skater to potential injury. The tire body is designed to a predetermined resiliency and reflects a specific band of performance parameters for proper operation under certain conditions. Such conditions include, speed, cornering and shock absorption characteristics. Skaters desiring different performance characteristics have in the past been forced to change skate wheels to achieve satisfactory results. The present invention enables a skater to vary the performance parameters of a skate merely by adjusting the pressure in an air chamber within the tire of a skate wheel. In addition, the present invention incorporates a novel bonding technique designed to positively hold a pneumatic wheel on its hub to thus protect the skater from potential injuries arising out of tire separation.

As shown in the drawings for purposes of illustration, a first embodiment of the present invention is a pneumatic in-line skating wheel 2 with an adjustably resilient tire 4 annularly encasing an integrally bonded hub 6 . Encapsulated within the tire is an annular air bladder 8 centrally spaced. A valve 10 positioned within the tire allows access to the air bladder for inflation or deflation thereof The wheel assembly is fabricated using open cast molding techniques with the hub and tire formed from materials known to form strong chemical bonds when sufficiently heated. During the molding and curing processes, an exothermic reaction within the air bladder is conveniently employed to distend the bladder causing it to firmly embrace the drop center of the hub. Hardness differentials between the valve and the tire provide for hermetic sealing of the assembly without the need for additional seals or gaskets.

The hub is constructed of hard polyurethane, typically having a durometer index of 65D and includes a central axle bore 21 configured at its opposite ends with countersunk cylindrical bearing assembly cavities 24 and 26 configured to receive the outer races of respective bearing assemblies for riding on the skate axle. The hub is formed with axially spaced apart, radially projecting flanges 12 and 14 which radiate outwardly from a drop center 20 angling outwardly along radially and axially outwardly tapered surfaces 46 and 48 to then turn axially outwardly to form radially outwardly facing flat bead seats 32 and 34. Conveniently, the axial exterior surfaces of the flanges 12 and 14 are formed with annular indentations configured concentric with the axle and axially indented at 36 and 38.

The drop center is formed with a peripheral configuration of somewhat of a sawtooth shape to define angularly shaped stand off ribs defining spokes 52 radiating outwardly to respective stand off apexes defining support tips 54.

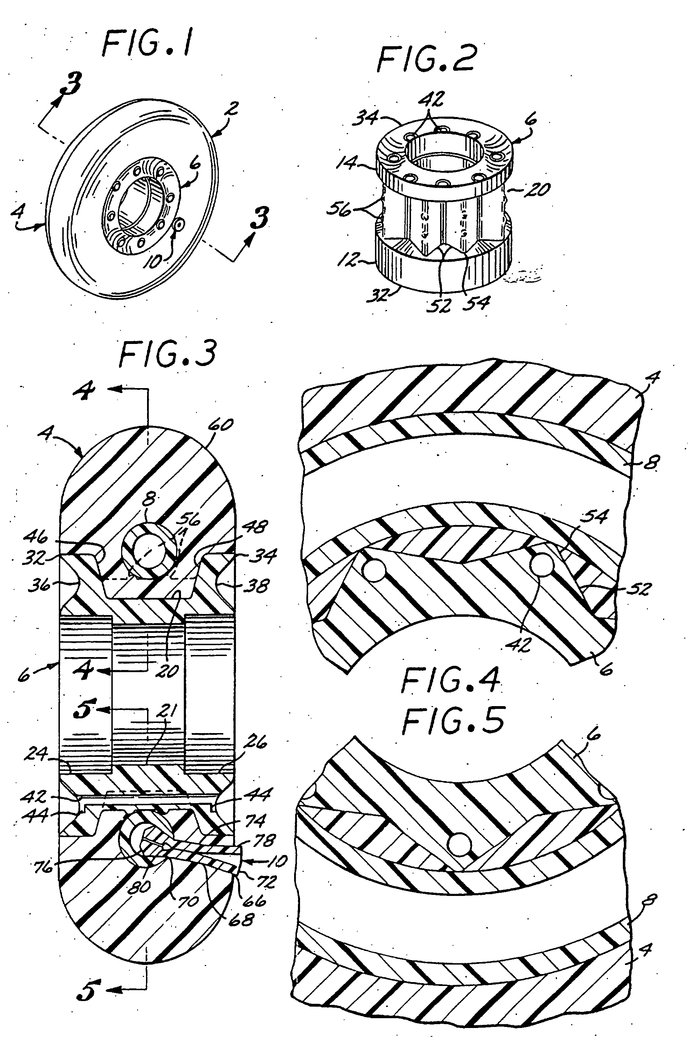

Formed on the respective support tips are axially spaced apart positioning nubs 56 (FIG. 2) which serve in practice to center the bladder during the molding process as will be described hereinafter.

The stand off spokes 52 are conveniently formed with axially projecting open ended bores 42 disposed equidistant thereabout and countersunk on their opposite ends 44 for receipt of axially projecting screws (not shown).

It will be appreciated that the hub is integrally formed of a single piece of hard polyurethane having high strength properties. The material used to form the hub is carefully chosen to produce the highest degree of bonding strength during the fabrication process with the tire body. A preferred embodiment of the present invention uses thermoplastic polyurethane (TPU) as the material of choice. It will be appreciated that careful selection of the proper polyurethane materials to form the hub and the tire will create a permanent high temperature bond during the fabrication process without the need for any extraneous bonding means such as epoxies or glues. Such a bond created between the two components virtually results in a single integrally formed unit.

Referring to FIGS. 3 and 4, the bladder 8 is constructed of approximately 60A durometer thermoplastic polyurethane to give it a soft, toroidal, self-distended shape to embrace the tips 54 of the hub spokes 52 located axially between the arrayed pairs of locator nipples 56 projecting therefrom. Sitting annularly within the drop-center 20, the bladder is completely exposed except for the points of contact with the hub teeth. Due to the triangular shape of the spokes, only the tip of each spoke contacts the bladder, thus keeping the unexposed portions of the bladder to a minimum. It will be appreciated that this degree of exposure will provide, except for the respective contact points, a relatively complete encapsulation of the bladder within the tire body and simultaneously provide bonding with the polyurethane material of such bladder as well as to the surface area between the tire body and the hub to form a structurally integral system. It will further be appreciated that a predetermined volume of air is trapped within the bladder to cooperate with the wall thereof to provide sufficient ambient pressure to keep the bladder self distended and to expand upon heating during the wheel fabrication process such that the bladder maintains a constant position around the hub. As will be understood by those skilled in the art, the bladder itself may be constructed of a material such that the wall thereof will provide sufficient structural integrity to be self distending.

Referring to FIGS. 1 and 3, the tire body 4 is toroidally formed from a resilient thermoset polyurethane material, such as an MDI based polyurethane, to be chemically similar to the hub material. Due to the fabrication process described hereinafter involved in the molding the tire body, the inner diameter of the tire body at the drop center 20 and the radial walls at the flange surfaces 46 and 48 bond positively to the hub to completely encapsulate the bladder between the tire and hub to form an air retaining capsule independent of the subsequent integrity of the bladder itself.

Formed to project axially and radially outwardly in the tire body 4 is a valve bore 66 formed at its inner extremity with a small diameter constricting neck and having an outwardly opening frusto conically shaped passage 68. The passage extends from the tire body exterior 60 to the upper surface of the encapsulated bladder 70. Received within the passage is an elastomeric, open ended tubular valve 72 constructed of a more resilient urethane than the tire body and formed with a narrow compressible neck 74 to be compressed radially inwardly by the more rigid tire body. The cross section of the valve is oversized with respect to the passage so that the softer material will be compressed by the polyurethane tire body. One end 76 of the valve penetrates into the bladder 8 and is formed with an enlarged retainer head which serves to anchor such tube within the bladder. The other end 78 slightly protrudes from the tire body exterior for ease of access. Midway through the passage lies a slightly enlarged cavity 80 which opens up into the neck. The cavity serves to define the neck opening that undergoes compression within the tire body. It will be appreciated by those skilled in the art that the hardness differential between the tire body and the valve will normally compressibly close the valve at the neck, resulting in an airtight seal internally and externally. The bladder may be forcibly accessed using an appropriately hollowed needle for inflation or deflation of the bladder. Additionally, due to the hermetic construction of the tire body around the bladder, the air tight capacity of the wheel is not necessarily dependent on the bladder. Thus, various embodiments may integrate the bladder in the tire body.

It will be appreciated that one embodiment of the skate wheel of the present invention exhibits adjustable performance parameters. By varying the amount of air within the bladder, speed, traction, and shock absorption characteristics of the skate wheel may be substantially altered. Inflation or deflation of the bladder correspondingly makes the tire body less resilient or more resilient. A stiffer, less resilient tire body translates into a faster, slicker, and bumpier ride. A softer, more resilient tire body translates into a slower, grippier and relatively shock resistant ride. Further, skaters of different sizes and weights may purchase the same wheels and adjust them respectively to achieve the same skating experience.

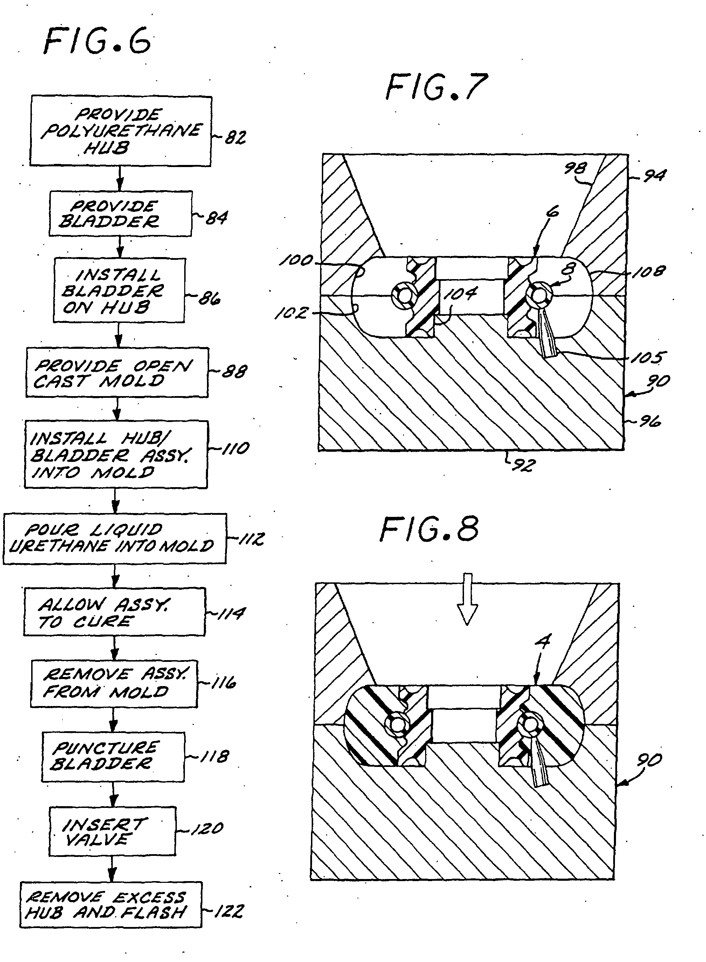

FIGS. 6, 7 and 8 illustrate a preferred method of making the wheel and one form of mold that may be used for this purpose with occasional additional reference to FIGS. 1 - 3. According to the preferred method, a hard thermoplastic polyurethane hub 6 and a soft, elastic toroidal air filled bladder 8 are selected as at 82 (FIG. 6). The hub construction is important in that the material must be structurally rigid and such that it will afford a high integrity chemical bond with the material selected for the tire body. In a preferred embodiment, the bladder must be of a type having a hermetically sealed air filled annular cavity preferably formed of endless thermoplastic polyurethane rubber tubing. The bladder is selected at 84 and stretched over one of the flanges and looped around the hub drop center as at 86 and carefully aligned within annularly arrayed locator nub 56 which tend to maintain such bladder centrally located within the axial dimension of the drop center 20. It will be appreciated that such bladder, in some embodiments, may be constructed of a material with limited distensible characteristics so that it may be pre-pressurized so that it will inherently maintain the desired gaseous pressure therein to thus provide the desired tire performance characteristics without the necessity of valving.

An open-cast mold 90 is provided at 88 to form the tire body annularly around the resulting hub/bladder subassembly during the polyurethane casting operation. The mold includes a rectangularly formed housing 92 having upper and lower halves 94 and 96. The upper half 94 is formed with an upward opening frusto-conically shaped pour hole defining a gate 98 extending downwardly into a downwardly facing half toroidally formed cavity 100. The lower half is formed with an upwardly facing half toroidally formed cavity 102 having an upstanding cylindrical centering stub 104 disposed centrally therein. Such lower half further includes an upwardly opening blind bore 105 angling radially and axially inwardly for slip fit receipt therein of the base end of a tapered male valve passage mold pin (not shown) to maintain external access to the air cavity insert during the polyurethane casting operation. The two halves, when joined, form an enclosed toroidal chamber 108 with an access opening.

Upon installation of the bladder 8 around the hub 6 the resulting sub-assembly is placed centrally within the mold at 110. The polyurethane casting operating continues with the pouring of a predetermined volume of liquid thermoset polyurethane into the conical opening 98 of the mold at 112. The urethane is at a temperature sufficiently elevated to allow high viscosity of the material. For the preferred embodiment, the polyurethane is maintained in a molten state at a temperature of about 140° C to, when poured on the hub at room temperature, react with such hub to form the desired bond. Once poured, the liquid thermoset seeps around and into the communication channels formed between the hub drop center spokes 52 to form axial bridges disposed between the respective spokes. It will be appreciated that the spokes, by supporting the bladder 8 and forming therebetween seepage channels, provide a major bonding area radially about the hub drop center inwardly of the tire body and cooperate in forming an integral tire body enveloping nearly the entire periphery of the bladder. After the liquid thermoset is poured, a plug (not shown) may be inserted in the gate opening 98 to abut the formed bottom end thereof with the liquid polyurethane forming the sides of the tire to establish the desired finished form. The mold 90 is set aside to allow the assembly to cure as at 114 (FIG. 6).

During the curing process, which generally takes from one to three (hours), several important physical transformations take place which are critical to the present invention. First, following introduction of the hot liquid urethane, the air filled bladder 8 itself heats up, causing an expansion of the air within the bladder. The resultant exothermic reaction heats the entrapped air expanding the bladder to cause it to firmly grip the drop center 20 thereby maintaining such bladder distended and firmly centering it between the centering necks 56 (FIG. 3) to support it against dislodgement during the conclusion of the pour process and during the curing stage. The second transformation occurring during curing is the hardening of the thermoset polyurethane into the tire body. Most importantly, however, is the chemical bonding which takes place between the hub thermoplastic and the tire body thermoset during curing.

Formed of chemically similar materials, the hub 6, bladder 8 and the tire body 4 fuse together during the curing process, forming an integral unit. The high temperature of the liquid thermoset causes a microscopic layer of the hub thermoplastic to liquefy and permeate into the adjacent thermoset. Likewise, the adjacent thermoset microscopically permeates into the thermoplastic. As the resulting mixture hardens, the previous hub to liquid urethane boundary is replaced by a fused integrally formed tire body and hub. It will be appreciated that the chemical bond formed between the bladder, hub and the tire body virtually fuses the components together into a single integral unit without the use of extraneous and potentially unreliable bonding agents. With the advent of adjustable performance wheels, and the increasingly harsher stresses associated therewith, a stronger and more reliable hub to tire bond is a necessity.

Following the curing process, the mold 90 is carefully opened, and the resulting wheel removed at 116. A needle-like tool is inserted into the valve passage so as to puncture the bladder at 118. Next, a tubular, soft valve 10 is installed on an insertion tool, and inserted at 120 into the valve passage 68. The valve is inserted far enough into the passage to allow access to the bladder interior. Since the valve is formed of a relatively soft polyurethane material, the harder tire body will act to compress the valve closed, thus effectively keeping the bladder sealed. However, the bladder may still be accessed for inflation or deflation by inserting a suitable tubular needle into the valve opening. In practice, it will be appreciated that the valve may be of any conventional type, may be formed integral with the bladder and, in some embodiments, where subsequent adjustments in pressure are not sought, will not be necessary.

Assembly of the pneumatic in-line skating wheel is completed following final trimming of the rough product at 122. Any excess urethane "flash" is trimmed to make the tire body smooth and free from rough edges. The wheel is now ready for installation onto an in-line roller skate.

In operation, it will be appreciated that the first embodiment of the tire of the present invention will be mounted on a skate axle about a symmetrical center line between the bearing assemblies nested in the opposite sides of the axle bore 21. The tire may be inflated to the desired pressure by inserting a needle in the inflation valve 10 forcing the walls thereof open to introduce the tip of the needle into the bladder such that the pump may be actuated to inflate the bladder to the desired pressure. It will be appreciated that in the structure of this invention, the integrity of the wall of the bladder becomes less important during operation of the tire since, in the event the wall of such bladder should rupture, the pressure within the cavity defined by such bladder is still retained against escape because of the positive bonding of the tire against the drop center 20 and sealing flanges 46 and 48 and seats 32 and 34. Then, when the skate is loaded and force applied to the body of the tire, such force will be resisted in a manner proportional to the pressure in the cavity defined by such bladder. For heavier skaters, the cavity will be pressurized to a higher pressure so as to minimize squat of the tire under load. However, for lighter skaters, the pressurization needle may be inserted in the valve 10 to allow air to escape therefrom to thereby lower such pressure slightly and, if necessary, the bladder cavity repressurized. Then, with the lower pressure in the bladder cavity, when the skate wheel is loaded, there will be some tendency of the tire body to squat about the bladder cavity to thus provide for shock absorption and a smoother ride. Moreover, for more athletic skating activities, the squat and flexibility of the tire body may become more important in assuring a firm grip between the tire surface and the underlying support surface.

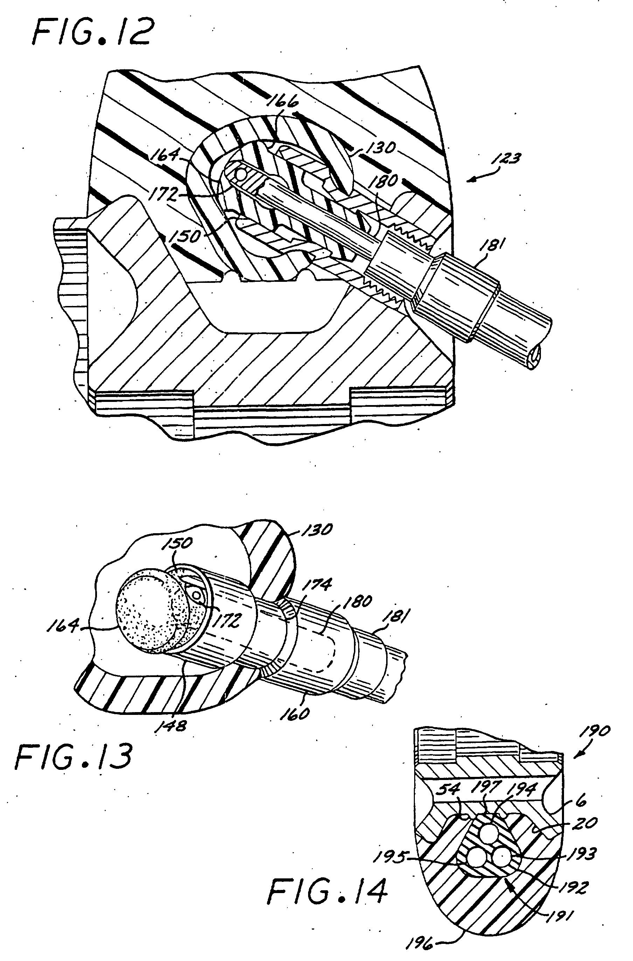

A second embodiment of the pneumatic skate wheel 123 shown in FIGS. 11, 12 and 13 is similar to that shown in FIGS. 1-5 and includes, generally, a hub 125 and a tire 128 configured similarly to the hub 6 and tire 4 arrangement of FIG. 3, with an alternative embodiment in the form of an air bladder 130 in fluid communication with a poppet style pneumatic valve 140.

Referring to Fig. 11, the hub 125 incorporated in the second embodiment of the skate wheel 123 includes all of the features of the hub 6 shown in Fig. 3 and is further formed with a valve insertion bore 126 angling axially inwardly and radially outwardly at an angle perpendicular through a side flange 127. It will be appreciated that the bore may be formed during the molding process or may be bored subsequent thereto.

As illustrated in FIG. 11 an air bladder 130 radially surrounds the hub 125 and is constructed of approximately 70A durometer thermoplastic polyurethane to give it a slightly more rigid self distended shape than the aforedescribed bladder 8 of Fig. 3. The bladder is formed with a rounded equilaterally triangular cross section to define a radially inwardly facing relatively narrow apex 132 seated against the radial outer extremity of the hub ribs. Also defined by the bladder cross section, and disposed opposite the narrow apex is a wide bladder tread wall 134 defining the bladder radial outer extremity. The bladder cross section interior is formed by rounded equiangular comers 133 joined by the outer bladder wall 134 and two axially outwardly diverging bladder side walls 135 and 136. Formed in the lateral bladder side wall 136 is a throughbore 138 aligned with the valve insertion bore 126. As will be apparent below, an important advantage of the cross sectional shape of the bladder is the fact it affords a long dimension in the axial direction of the valve to afford clearance at the distal end of such valve. Consequently, other polygonal configurations will be apparent to those skilled in the art for achieving the same results.

Formation of the bladder triangular cross section may be achieved by subjecting a circular polyurethane tube to an elevated temperature while snugly fitted into a triangular in cross section cavity formed into an annular mandrel (not shown). The thermoplastic nature of the bladder material responds to the elevated temperature by softening and molding to the mandrel cavity. In one embodiment, the polyurethane is molded in a mold cavity to form confronting annular halves which are subsequently bonded together to form the composite bladder. In one embodiment, the valve is formed integral with one of the halves.

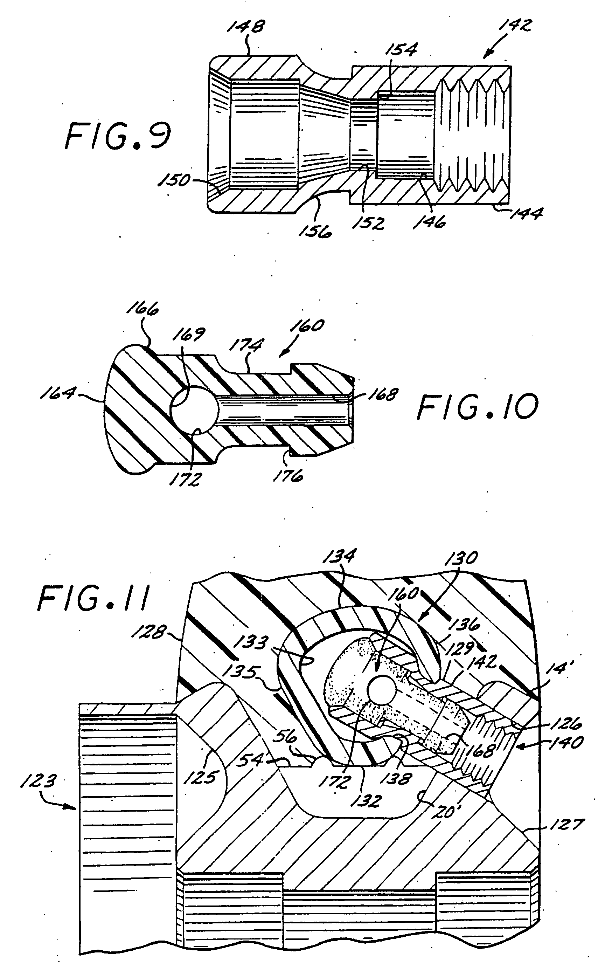

Referring to Figs. 9-13, an alternative embodiment of the pneumatic valve 140 includes, generally, a valve barrel 142 and a resilient valve core 160. The valve barrel, as illustrated in Figs. 9 and 11, is formed at its proximal end with an axially outwardly opening threaded socket 146 for receiving the neck of an inflation needle housing 181 (FIG. 12) and a distal end 148 terminating in a distally opening conical poppet seat 150. The barrel is formed medially with a reduced in diameter interior collar 152 to define an annular shoulder 154 facing outwardly toward the proximal end 144. Intermediately formed externally around the barrel is an annular groove 156 received in, and resiliently embraced by the bladder throughbore 138. A preferred rigid material for the valve barrel is hard plastic such as nylon but, in practice it has been found that 2011/2024 aluminum works well.

Referring to Figs. 10 and 11, the valve core 160 is mounted medially in the valve barrel and is formed distally with an enlarged in cross section circular poppet 164 having an axially outwardly facing rounded shoulder 166 complementally formed to seal against the poppet seat 150. A blind axial bore 168 is formed centrally in the core to open outwardly to the proximal end to receive the shank of an inflation needle 180 carried from the housing 181 and terminates at its inner end in a stop 169. A laterally formed cross bore 172 intersects the axial bore at the stop to establish fluid communication between the axial bore and the lateral side of the core. Formed medially around the core is an annular neck 174 to define at one end an inwardly facing annular step 176.

The material used to form the core must be of sufficient resiliency and restorability to be repeatedly deformed in response to insertion of an inflation needle, and return to its original configuration as the needle is removed. In this regard, a preferred material for constructing the core is Elastollan 1185A-10 NAT, which is an ether-based thermopolyurethane.

The tire 128 incorporated in the second embodiment of the skate wheel 123 is similar to the aforedescribed tire and is formed with a valve bore 129 to project axially and radially outwardly from the bladder bore 138 interposed in axial alignment between the bladder bore and the valve insertion bore 126 formed in the rim flange.

Assembly of the second embodiment of the skate wheel of the present invention is similar to that for the first embodiment, with the bladder 130 selected and stretched over one of the hub flanges and looped around the hub drop center such that the bladder apex 132 is carefully aligned within the annularly arrayed locator nubs. The hub and bladder subassembly is then placed into a mold cavity where the tire 128 is cast to annularly surround the resulting hub/bladder subassembly and bond to the hub flanges. A counter sink boring tool is then introduced into the rim bore 126 to bore a slightly undersized bore in the tire body and form the bore 138 in the bladder with a relaxed diameter about half that of the valve barrel. The valve distal end is then inserted through the insertion bore 126 and pressed through tire bore 129 and into the bladder bore 138 to stretch such bladder bore such that the pierced bladder wall 136 grips the outer annular groove 156 of the valve barrel. The finished skate wheel is then pre-pressurized to a standard inflation level during the assembly process, then packaged and distributed to retailer outlets.

Skaters endeavoring to customize the performance of the skate wheel 123 may merely select a hand pump with the conventional pump needle 180 (Figs. 12 and 13) projecting from a needle housing 181. As shown in Figs. 12 and 13, the skater will slidably insert the needle into the core axial bore 168 and apply a slight inwardly axial force to advance the needle therethrough. The core 160 frictionally maintains a bias against the advancing needle and remains mountingly positioned in the barrel 142 through the abutting engagement of the core annular shoulder 176 against the barrel annular step 154. Progression of the needle to the end of the bore 168 will cause the needle to engage the stop 169 and deformably stretch the core axially outwardly into the bladder, lifting the poppet 164 off the poppet seat 150. Continued travel of such needle through such core will typically tend to distort the shape of the distal end of such core causing one diametrical half of such cross bore 172 to substantially align axial with the axial bore 168 allowing the tip of the needle to slidably progress into such half of the cross bore. The realignment of the cross bore causes a corresponding radially outward deformation of the poppet into one of the rounded equiangular corners 133 of the bladder inner walls as the needle progresses through the cross bore and into the bladder at which time fluid communication is established therebetween.

Once inflation of the bladder 130 to the desired pressure is completed, the needle 180 is slidably removed from the core 160, at which time the restorable properties of the core cooperate with the substantial pressure differential acting across the poppet 164 to instantly sealingly re-seat the poppet onto the poppet seat 150 to positively maintain the customized pressure level obtained within the skate wheel bladder. The substantially instantaneous sealing effect of the poppet and tendency of the high pressure in the bladder to drive the poppet into positive sealing engagement with the seat are very important since even a very small leak out of the relatively small volumed bladder results in a substantial decrease in air pressure and loss of wheel performance.

Referring to FIGS. 11 and 12, it will be appreciated that the triangular-in-cross section shape of the bladder 130 exhibits advantages in this combination over a round bladder having a comparable parametrical wall. As noted in FIG. 11, with the valve projecting perpendicular to the plane of the flange 14' to extend perpendicularly through the bladder side wall 136 to terminate the barrel 142 short of the distal corner of such bladder, substantial clearance is provided for radial deformation of the poppet 164 as it lifts away from the seat 150. This extra clearance enables the poppet to nest into a rounded corner and allow the needle 180 to more easily access the bladder and reduce engagement stresses on the core 160.

Furthermore, the triangular cross section of the bladder allows the radial outer tread wall to be embedded radially deeper in the tire body 128, thereby maintaining greater tire body radially exterior of the bladder to provide for greater stability.

A third embodiment of the skate wheel of the present invention, generally designated 190, and illustrated in Fig. 14, is intended as a pre-pressurized version of the aforementioned skate wheel embodiments and includes the hub 6 of the first embodiment and an integral bladder 191 annularly looped around the hub and annularly surrounded by a tire 196.

The bladder 191 comprises a resilient annular core 192 of approximately 70A durometer hardness with a substantially symmetrical annular triad of individually sealed air chambers 193, 194 and 195 disposed radially within the bladder core and symmetrically about the bladder central axis. The density of the extruded material is such that the air chambers are impermeable to the trapped air confined therewithin. The bladder is formed with a triangular cross section of solid polyurethane encasing the annular chambers arranged in a balanced triangular pattern with the radially inner chamber 194 disposed in the plane of the axial center of the tire and the radially outer chambers 193 and 195 spaced equidistant on either side of such plane. The core may be fabricated by extruding a straight strip of formed thermoplastic polyurethane, cutting the strip to length and welding the ends together to form an annular configuration such that one of the triangular edges forms the innermost radial portion of the bladder to define an apex 197 around the radially inner chamber 194. In the preferred process, the polyurethane will be molded in rings defining the opposite halves of the bladder and those halves then fused together to form the composite bladder. This procedure traps air within the air chambers to hold the bladder at ambient pressure. The material used must be of sufficient density and molecular structure to be impermeable to air.

Assembly of the third embodiment of the skate wheel 190 of the present invention is substantially similar to the aforedescribed embodiments with the bladder 191 placed around the hub drop center 20 such that the apex 197 aligns annularly within the hub rib nubs 54. The hub/bladder sub-assembly is then placed in a mold where the tire is annularly cast substantially around the bladder and the hub drop center to form the resulting skate wheel.

It will be appreciated that the respective apexes 52 are shaped to form therebetween triangularly shaped cavities defining axially extending communication channels which, when the tire body is poured, flow urethane axially therethrough to form support bridges interior of the shock absorber bladder supported thereon so as to cooperate with the overall tire and essentially encapsulate such tube. Of equal importance is the fact that the major portion of the annular tire body is disposed radially distally of the bladder 8 to be configured with a semi-cylindrically shaped tread surface 60 so that the major portion of the annularly shaped urethane body acts as a firm cushion as the wheel rolls over bumps and irregularities on the support surface. When the tire encounters abrupt irregularities in the support surface, such as pebbles or cracks, the resultant sharp forces acting radially inwardly towards the axial_supporting the hub will, to come degree, compress the cushion and flex it inwardly against the bladder to the degree to which the pressure within such bladder resists such flexure.

Advantages of the third embodiment include a reduced cost of manufacture resulting from a decrease in the number of parts and a reduction in assembly steps and assembly time required for fabrication. This results in a passed along cost savings to skaters who prefer the economy and consistency of an unpressurized design, but who desire the advantages arising from a pneumatic in-line skate wheel. Additionally, the extruded design of the bladder incorporated in the third embodiment is stronger structurally to more fully withstand the stresses acting on the weld joining the two ends of the bladder together. Furthermore, separating the pneumatic feature of the present invention into separately sealed chambers preserves the pneumatic functionality of the wheel should one of the chambers become pierced or damaged.

From the foregoing, it will be apparent that the pneumatic tire of the present invention provides a high integrity tire assembly in which the pressure in the pressure cavity may be easily adjusted and which will allow for the skate ride afforded by a pneumatic tire without the shortcomings normally associated with a pneumatic tire. Thus, the expense of fabrication and of inventorying numerous different tires of different physical characteristics is reduced.

## Claims

1. A pneumatic in-line roller skate wheel (2, 123, 190) comprising:
a relatively rigid urethane hub (6, 125) and a relatively soft molded urethane tire body (4), **characterised in that** the relatively rigid urethane hub is formed with an annular drop-center (20, 20') and axially spaced apart retainer flanges (12, 14);
a shock absorber (8, 130, 191) is annularly surrounding said drop-center to form a gas chamber;
the relatively soft molded urethane tire body is nested in said drop-center and formed to substantially surround said shock absorber and project radially outwardly therefrom to form an annular cushion configured with a peripheral tread surface and further formed with laterally opposite sides bonded to said retainer flanges to form an annular cushion chamber about said hub to co-operate with said shock absorber to cushion the ride on said tire body and to transmit shock forces radially through from said tread to said tubular shock absorber.

2. A pneumatic in-line roller skate wheel (2, 123, 190) according to claim 1 wherein:
said hub (6, 125) is formed of thermoplastic polyurethane, said tire (4) is formed of thermoset polyurethane, and said shock absorber (8, 130, 191) is formed of thermoplastic polyurethane tubing.

3. A pneumatic in-line roller skate wheel (2, 123, 190) according to claim 2 wherein:
said hub (6, 125), said shock absorber (8, 130, 191), and said tire body (4) are constructed to chemically bond thereby forming an integral unit.

4. A pneumatic in-line roller skate wheel (2, 123, 190) according to claim 1 wherein:
said shock absorber (8, 130, 191) is constructed of a urethane having a durometer index of substantially 60A.

5. A pneumatic in-line roller skate wheel (2, 123, 190) according to claim 1 wherein:
said tire body (4) is constructed of an MDI based polyurethane material.

6. A pneumatic in-line roller skate wheel (2, 123, 190) according to claim 1 further including:
said tire body being further formed with a valve bore (66, 126) extending from said gas chamber to the exterior (60) of said tire body; and
a valve (72, 140) in said bore for receipt of pressurising gas to adjust the pressure in said chamber to adjust the magnitude of shock absorption whereby said gas chamber may be pressurised by sharp forces applied radially inwardly on said tread surface and will flex and cushion radially inwardly against the pressure.

7. A pneumatic in-line roller skate wheel (2, 123, 190) according to claim 1 including:
stand off ribs (52) disposed in annular spaced relation about said drop-center (20, 20') and projecting radially therefrom to terminate in respective contact tips (54) arrayed in a circular pattern.

8. A pneumatic in-line roller skate wheel (2, 123, 190) according to claim 7 wherein:
said gas chamber (8, 130, 191) is surrounding said drop-center (20, 20') and supported on the radially inner surface by said contact tips (54) to be stood off from said drop-center to form said shock absorber.

9. A pneumatic in-line roller skate wheel (2, 123, 190) according to claim 8 wherein:
said contact tips (54) are configured with respective pairs of axially spaced apart locator nubs(56) which serve to center said gas chamber (8, 130, 191) in contact with said stand off ribs.

10. A pneumatic in-line roller skate wheel (2, 123, 190) according to claim 9 wherein:
said tire body (4) projects radially distally from said gas chamber (8, 130, 191) to form an annular shock cushion defining a rounded axial cross section peripheral tread surface.

11. A pneumatic in-line roller skate wheel (190) according to claim 1 wherein:
said shock absorber (191) comprises a resilient annular core (192) formed with a plurality of pre-pressurised individually sealed annular gas chambers (193, 194, 195) disposed substantially about a common axis.

12. A pneumatic in-line roller skate wheel (123) according to claim 6 to be inflated by an inflation needle (180) carried from a needle housing wherein:
said retainer flanges angle radially and axially outwardly at a predetermined angle;
said shock absorber is in the form of a gas chamber (130) configured with a triangular cross section to define side walls (135, 136) projecting radially and axially outwardly at said predetermined angle from an apex (132) seated on said hub (125); and
said valve (140) includes a rigid barrel (142) received in said bore (126) and terminating at its interior end within said bladder in an annular valve seat (150), and at its opposite end in a needle housing socket (146), a resilient core (160) in said barrel and projecting interiorly therefrom past said seat to form a circular poppet (164) normally seated on said seat (150), said core (160) further formed with an axial bore (168) projecting inwardly from said socket to terminate in a stop (169), a cross bore (172) leading from said axial bore to the periphery of said core behind said poppet, said core having sufficient resiliency to normally draw said poppet against said seat and to, upon insertion of said needle in said axial bore and engagement with said stop, lift said poppet off said seat to establish a gas communication path from said cross bore to exhaust in the space between said poppet and said seat.

13. A method of making a pneumatic in-line roller skate wheel (2, 123, 190) **characterised by** the steps of:
selecting a relatively rigid urethane hub (6, 125) of the type having a drop-center (20, 20');
selecting a resilient annular gas filled distended bladder (8, 130, 191);
inserting said bladder in said drop-center, between said flanges (12, 14);
providing a polyurethane casting mold (90) of the type including a mold cavity for receipt of said hub and closeable thereon to co-operate therewith in forming a tire cavity (108), installing said hub and bladder into said mold;
selecting a soft urethane;
heating said soft urethane to a temperature where it will, when contacted with said relatively hard urethane, form a bond therewith;
flowing said relatively soft urethane into said tire cavity to fill said cavity and surround said cavity and substantially surround said bladder to form an air chamber and to bond to said retainer flanges; and
curing said relatively soft urethane.

14. A method of making a skate wheel (2, 123, 190) according to claim 13 wherein:
said bladder is selected filled with expandable gas;
said heating step includes heating said soft urethane to an elevated temperature sufficient to when contacted with said bladder, during said cure step, heating said gas to expand said gas within said bladder to a volume causing said bladder to firmly distend and firmly grip said drop-center.

15. A method of making a skate wheel (2, 123, 190) according to claim 13 wherein:
said heating step includes heating said soft urethane to a temperature of substantially 140°C so when contacted with said hub at room temperature an unbreakable bond will form between said hub, said tire and said bladder, during said cure step, to form-an integral unit.

16. A method of making a skate wheel (2, 123, 190) according to claim 13 wherein:
said bladder is selected from a material impermeable to air and is filled with air to a pressure equal to the ambient pressure.

17. A method of making a skate wheel (2, 123, 190) according to claim 13 further including the steps of:
placing a mold pin in said mold, of the type projecting axially inwardly to the center of said cavity, to maintain a bore in said soft urethane during said cure step;
selecting a soft, tubular valve of the type with a sealing neck; and
after said cure step, inserting said valve into said axial bore such that said sealing neck closes as a result of external compressive forces applied by said tire body urethane.

## Patentansprüche

1. Pneumatisches Rad für einspurigen Rollschuh (2, 123, 190), das umfaßt:
eine relativ starre Urethan-Nabe (6, 125) und einen relativ weichen, gegossenen Urethan-Reifenkörper (4),
**dadurch gekennzeichnet, daß**
die relativ starre Urethan-Nabe mit einem ringförmigen Tiefbett (20, 20') und axial beabstandeten Halteflanschen (12, 14) versehen ist;
ein Stoßdämpfer (8, 130, 191) das Tiefbett ringförmig umgibt, um eine Gaskammer zu bilden;
der relativ weiche, gegossene Urethan-Reifenkörper im Tiefbett sitzt und so geformt ist, daß er den Stoßdämpfer im wesentlichen umgibt und von diesem radial nach außen hervorsteht, um ein ringförmiges Kissen zu bilden, das mit einer Umfangslauffläche konfiguriert ist, und ferner mit lateral gegenüberliegenden Seiten versehen ist, die an den Halteflanschen verklebt sind, um eine ringförmige Kissenkammer um die Nabe auszubilden, die mit dem Stoßdämpfer kooperiert, um die Fahrt auf dem Reifenkörper abzufedern und Stoßkräfte radial von der Lauffläche auf den schlauchförmigen Stoßdämpfer zu übertragen.

2. Pneumatisches Rad für einspurigen Rollschuh (2, 123, 190) nach Anspruch 1, bei dem:
die Nabe (6, 125) aus thermoplastischem Polyurethan geformt ist, wobei der Reifen (4) aus wärmeaushärtendem Polyurethan geformt ist, und wobei der Stoßdämpfer (8, 130, 191) aus einem thermoplastischen Polyurethan-Schlauch geformt ist.

3. Pneumatisches Rad für einspurigen Rollschuh (2, 123, 190) nach Anspruch 2, bei dem:
die Nabe (6, 125), der Stoßdämpfer (8, 130, 191) und der Reifenkörper (4) so konstruiert sind, daß sie chemisch verbunden sind, um somit eine Baueinheit zu bilden.

4. Pneumatisches Rad für einspurigen Rollschuh (2, 123, 190) nach Anspruch 1, bei dem:
der Stoßdämpfer (8, 130, 191) aus einem Urethan mit einem Härtemesser-Index von etwa 60A konstruiert ist.

5. Pneumatisches Rad für einspurigen Rollschuh (2, 123, 190) nach Anspruch 1, bei dem:
der Reifenkörper (4) aus einem Polyurethanmaterial auf MDI-Basis konstruiert ist.

6. Pneumatisches Rad für einspurigen Rollschuh (2, 123, 190) nach Anspruch 1, das ferner umfaßt:
einen Reifenkörper, der mit einer Ventilbohrung (66, 126) versehen ist, die sich von der Gaskammer zur Außenseite (60) des Reifenkörpers erstreckt; und
ein Ventil (72, 140) in der Bohrung zum Aufnehmen von Druckgas, um den Druck in der Kammer einzustellen und die Stärke der Stoßabsorption einzustellen, wodurch die Gaskammer unter Druck gesetzt werden kann durch starke Kräfte, die radial nach innen auf die Lauffläche ausgeübt werden, und sich radial nach innen gegen den Druck verformt und federt.

7. Pneumatisches Rad für einspurigen Rollschuh (2, 123, 190) nach Anspruch 1, das umfaßt:
Abstandsrippen (52), die ringförmig beabstandet um das Tiefbett (20, 20') angeordnet sind und von diesem radial hervorstehen, um in entsprechenden Kontaktspitzen (54) zu enden, die in einem kreisförmigen Muster angeordnet sind.

8. Pneumatisches Rad für einspurigen Rollschuh (2, 123, 190) nach Anspruch 7, bei dem:
die Gaskammer (8, 130, 191) das Tiefbett (20, 20') umgibt und auf der radial inneren Oberfläche mittels der Kontaktspitzen (54) unterstützt ist, um vom Tiefbett beabstandet zu sein und den Stoßdämpfer auszubilden.

9. Pneumatisches Rad für einspurigen Rollschuh (2, 123, 190) nach Anspruch 8, bei dem:
die Kontaktspitzen (54) mit entsprechenden Paaren von axial beabstandeten Anordnungsknoten (56) konfiguriert sind, die zum Zentrieren der Gaskammer (8, 130, 191) in Kontakt mit den Abstandsrippen dienen.

10. Pneumatisches Rad für einspurigen Rollschuh (2, 123, 190) nach Anspruch 9, bei dem:
der Reifenkörper (4) radial nach außen von der Gaskammer (8, 130, 191) hervorsteht, um ein ringförmiges Stoßkissen zu bilden, das eine Umfangslauffläche mit abgerundetem axialen Querschnitt definiert.

11. Pneumatisches Rad für einspurigen Rollschuh (190) nach Anspruch 1, bei dem:
der Stoßdämpfer (191) einen elastischen ringförmigen Kern (192) umfaßt, der mit mehreren im voraus unter Druck gesetzten, einzelnen, gekapselten ringförmigen Gaskammern (193, 194, 195) versehen ist, die im wesentlichen um eine gemeinsame Achse angeordnet sind.

12. Pneumatisches Rad für einspurigen Rollschuh (123) nach Anspruch 6, das mittels einer Aufblasnadel (180) aufgeblasen wird, welche von einem Nadelgehäuse getragen wird, bei dem:
die Halteflansche in einem vorgegebenen Winkel radial und axial nach außen angewinkelt sind;
der Stoßdämpfer die Form einer Gaskammer (130) aufweist, die mit einem dreieckigen Querschnitt konfiguriert ist, um Seitenwände (135, 136) zu definieren, die in dem vorgegebenen Winkel von einer Spitze (132), die auf der Nabe (125) sitzt, radial und axial nach außen hervorstehen; und
das Ventil (140) eine starre Trommel (142) enthält, die in der Bohrung (126) aufgenommen ist und an ihrem inneren Ende innerhalb der Blase in einem ringförmigen Ventilsitz (150) endet und an ihrem gegenüberliegenden Ende in einem Nadelgehäusesockel (146) endet, wobei ein elastischer Kern (160) in der Trommel angeordnet ist und hiervon über den Sitz hinaus nach innen ragt, um ein kreisförmiges Tellerventil (164) zu bilden, das normalerweise auf dem Sitz (150) sitzt, wobei der Kern (160) ferner mit einer Axialbohrung (168) versehen ist, die vom Sockel nach innen ragt, um in einem Anschlag (169) zu enden, wobei eine Querbohrung (172) von der Axialbohrung zum Umfang des Kerns hinter dem Tellerventil führt, wobei der Kern eine ausreichende Elastizität aufweist, um normalerweise das Tellerventil gegen den Sitz zu ziehen und um nach dem Einführen der Nadel in die Axialbohrung und dem Eingriff mit dem Anschlag das Tellerventil vom Sitz abzuheben, um einen Gasverbindungspfad von der Querbohrung einzurichten, um in den Raum zwischen dem Tellerventil und dem Sitz auszublasen.

13. Verfahren zur Herstellung eines pneumatischen Rades für einen einspurigen Rollschuh (2, 123, 190),
**gekennzeichnet durch** die Schritte:
Auswählen einer relativ starren Urethan-Nabe (6, 125) des Typs mit einem Tiefbett (20, 20');
Auswählen einer elastischen, ringförmigen, gasgefüllten aufgeblasenen Blase (8, 130, 191);
Einsetzen der Blase in das Tiefbett zwischen den Flanschen (12, 14);
Schaffen einer Polyurethan-Gießform (90) des Typs, der einen Gießhohlraum zur Aufnahme der Nabe enthält und darauf verschließbar ist, um mit dieser bei der Ausbildung des Reifenhohlraums (108) zu kooperieren, wobei die Nabe und die Blase in der Gießform installiert sind;
Auswählen eines weichen Urethans;
Erwärmen des weichen Urethans auf eine Temperatur, bei der es bei Berührung mit dem relativ harten Urethan eine Verbindung mit diesem eingeht;
Drücken des relativ weichen Urethans in den Reifenhohlraum, um den Hohlraum zu füllen und den Hohlraum zu umschließen und im wesentlichen die Blase zu umschließen, um eine Luftkammer auszubilden und eine Verbindung mit den Halteflanschen herzustellen; und
Aushärten des relativ weichen Urethans.

14. Verfahren zum Herstellen eines Rollschuhrades (2, 123, 190) nach Anspruch 13, bei dem:
die Blase selektiv mit einem expandierbaren Gas gefüllt wird;
der Erwärmungsschritt das Erwärmen des weichen Urethans auf eine erhöhte Temperatur umfaßt, die ausreicht, um während des Aushärtungsschrittes bei Berührung mit der Blase das Gas zu erwärmen, um das Gas innerhalb der Blase auf ein Volumen zu expandieren, das die Blase veranlaßt, sich fest auszudehnen und mit dem Tiefbett fest in Eingriff zu gelangen.

15. Verfahren zum Herstellen eines Rollschuhrades (2, 123, 190) nach Anspruch 13, bei dem:
der Erwärmungsschritt das Erwärmen des weichen Urethans auf eine Temperatur von etwa 140 °C umfaßt, so daß dann, wenn es bei Raumtemperatur mit der Nabe in Kontakt kommt, während des Aushärtungsschrittes eine unlösbare Verbindung zwischen der Nabe, dem Reifen und der Blase ausgebildet wird, um eine Baueinheit auszubilden.

16. Verfahren zum Herstellen eines Rollschuhrades (2, 123, 190) nach Anspruch 13, bei dem:
die Blase aus einem Material gewählt ist, das für Luft undurchlässig ist, und mit Luft bis zu einem Druck gleich dem Umgebungsdruck gefüllt wird.

17. Verfahren zur Herstellung eines Rollschuhrades (2, 123, 190) nach Anspruch 13, das ferner die Schritte umfaßt:
Plazieren eines Gußstiftes des Typs, der axial nach innen zur Mitte des Hohlraums hervorsteht, in der Gießform, um eine Bohrung im weichen Urethan während des Aushärtungsschritts zu erhalten;
Auswählen eines weichen, schlauchförmigen Ventils des Typs mit Dichtungshalsabschnitt; und
nach dem Aushärtungsschritt, Einsetzen des Ventils in die Axialbohrung, so daß der Dichtungshalsabschnitt verschlossen wird als Ergebnis äußerer Kompressionskräfte, die durch das Reifenkörper-Urethan ausgeübt werden.

## Revendications

1. Roue pneumatique (2, 123, 190) de patin à roulettes en ligne, comprenant :
un moyeu (6, 125) en uréthane relativement rigide et une carcasse (4) de pneu moulée en uréthane relativement tendre, **caractérisée en ce que** le moyeu en uréthane relativement rigide est formé avec une base creuse annulaire (20, 20') et des joues de maintien espacées axialement l'une de l'autre (12, 14) ;
un absorbeur de chocs (8, 130, 191) entoure de manière annulaire ladite base creuse pour former une chambre à gaz ;
la carcasse de pneu moulée en uréthane relativement tendre s'emboîte dans ladite base creuse et est formée pour entourer sensiblement ledit absorbeur de chocs et faire saillie radialement vers l'extérieur de celui-ci pour former un coussin annulaire configuré avec une surface de roulement périphérique et formé en outre avec des bords latéraux opposés liés auxdites joues de maintien pour former une chambre de coussin annulaire autour dudit moyeu dans le but de coopérer avec ledit absorbeur de chocs afin d'amortir l'état de surface que rencontre ladite carcasse de pneu et de transmettre radialement des forces de chocs par l'intermédiaire de ladite bande de roulement audit absorbeur de chocs tubulaire.

2. Roue pneumatique (2, 123, 190) de patin à roulettes en ligne selon la revendication 1, dans laquelle :
ledit moyeu (6, 125) est constitué de polyuréthane thermoplastique, ledit pneu (4) est constitué de polyuréthane thermodurci, et ledit absorbeur de chocs (8, 130, 191) est constitué d'un tube en polyuréthane thermoplastique.

3. Roue pneumatique (2, 123, 190) de patin à roulettes en ligne selon la revendication 2, dans laquelle :
ledit moyeu (6, 125), ledit absorbeur de chocs (8, 130, 191) et ladite carcasse (4) de pneu sont structurés pour se lier chimiquement, en formant ainsi un module d'une seule pièce.

4. Roue pneumatique (2, 123, 190) de patin à roulettes en ligne selon la revendication 1, dans laquelle :
ledit absorbeur de chocs (8, 130, 191) est constitué d'un uréthane présentant un indice de dureté de sensiblement 60A.

5. Roue pneumatique (2, 123, 190) de patin à roulettes en ligne selon la revendication 1, dans laquelle :
ladite carcasse (4) de pneu est constituée d'une matière de polyuréthane à base de MDI.

6. Roue pneumatique (2, 123, 190) de patin à roulettes en ligne selon la revendication 1, comprenant en outre :
ladite carcasse de pneu étant en outre formée avec un trou (66, 126) de valve s'étendant de ladite chambre à gaz vers l'extérieur (60) de ladite carcasse de pneu ; et
une valve (72, 140) située dans ledit trou destinée à recevoir un gaz pressurisé de façon à régler la pression dans ladite chambre pour régler le degré d'absorption de chocs, ce par quoi ladite chambre à gaz peut être pressurisée par de grandes forces appliquées radialement vers l'intérieur sur ladite surface de roulement et fléchir et assurer un amortissement radialement vers l'intérieur contre la pression.

7. Roue pneumatique (2, 123, 190) de patin à roulettes en ligne selon la revendication 1, incluant :
des nervures (52) d'écartement disposées dans une relation espacée annulaire autour de ladite base creuse (20, 20') et faisant saillie radialement de celle-ci pour se terminer en pointes de contact respectives (54) groupées suivant un motif circulaire.

8. Roue pneumatique (2, 123, 190) de patin à roulettes en ligne selon la revendication 7, dans laquelle :
ladite chambre à gaz (8, 130, 191) entoure ladite base creuse (20, 20') et est supportée sur la surface radialement intérieure par lesditee pointes (54) de contact pour être maintenue espacée de ladite base creuse afin de former un absorbeur de chocs.

9. Roue pneumatique (2, 123, 190) de patin à roulettes en ligne selon la revendication 8, dans laquelle :
lesdites pointes (54) de contact sont configurées avec des paires respectives de pièces (56) de positionnement espacées axialement l'une de l'autre qui servent à centrer ladite chambre à gaz (8, 130, 191) en contact avec lesdites nervures d'écartement.

10. Roue pneumatique (2, 123, 190) de patin à roulettes en ligne selon la revendication 9, dans laquelle :
ladite carcasse (4) de pneu fait saillie radialement de manière distale de ladite chambre à gaz (8, 130, 191) pour former un amortisseur de chocs annulaire définissant une surface de roulement périphérique à section axiale arrondie.

11. Roue pneumatique (190) de patin à roulettes en ligne selon la revendication 1, dans laquelle :
ledit absorbeur de chocs (191) comprend un noyau annulaire élastique (192) formé avec une pluralité de chambres à gaz annulaires étanches prépressurisées individuellement (193, 194, 195) disposées sensiblement autour d'un axe commun.

12. Roue pneumatique (123) de patin à roulettes en ligne selon la revendication 6 à gonfler à l'aide d'une aiguille (180) de gonflage portée par un logement d'aiguille, dans laquelle :
lesdites joues de maintien sont anglées radialement et axialement vers l'extérieur à un angle prédéterminé ;
ledit absorbeur de chocs a la forme d'une chambre à gaz (130) configurée avec une section transversale triangulaire pour définir des parois latérales (135, 136) faisant saillie radialement et axialement vers l'extérieur, audit angle prédéterminé par rapport à un sommet (132) situé sur ledit moyeu (125) ; et
ladite valve (140) inclut un fût rigide (142) reçu dans ledit trou (126) et se terminant, à son extrémité intérieure, à l'intérieur de ladite vessie, en un siège annulaire (150) de valve et, à son extrémité opposée, en une douille (146) de logement d'aiguille, un noyau élastique (160) situé dans ledit fût et faisant saillie vers l'intérieur de celui-ci au-delà dudit siège pour former un champignon circulaire (164) appuyé normalement sur ledit siège (150), ledit noyau (160) étant en outre formé avec un trou axial (168) en saillie vers l'intérieur de ladite douille pour se terminer en une butée (169), un trou transversal (172) menant dudit trou axial à la périphérie dudit noyau derrière ledit champignon, ledit noyau ayant une élasticité suffisante pour tirer normalement ledit champignon contre ledit siège et pour, lors de l'introduction de ladite aiguille dans ledit trou axial et de l'engagement avec ladite butée, élever ledit champignon dudit siège pour établir un trajet de communication de gaz à partir dudit trou transversal pour décharge dans l'espace entre ledit champignon et ledit siège.

13. Procédé de fabrication d'une roue pneumatique (2, 123, 190) de patin à roulettes en ligne, **caractérisé par** les étapes, dans lesquelles :
on choisit un moyeu (6, 125) en uréthane relativement rigide du type comportant une base creuse (20, 20') ;
on choisit une vessie annulaire élastique dilatée remplie de gaz (8, 130, 191) ;
on introduit ladite vessie dans ladite base creuse, entre lesdites joues (12, 14) ;
on utilise un moule de coulée de polyuréthane (90) du type incluant une cavité de moule destinée à recevoir ledit moyeu et pouvant se fermer sur celui-ci pour coopérer avec celui-ci en formant une cavité (108) de pneu, en installant ledit moyeu et ladite vessie dans ledit moule ;
on choisit un uréthane tendre ;
on chauffe ledit uréthane tendre à une température à laquelle il forme, lors du contact avec ledit uréthane relativement dur, une liaison avec celui-ci ;
on fait couler ledit uréthane relativement tendre dans ladite cavité de pneu pour remplir ladite cavité et entourer ladite cavité et entourer sensiblement ladite vessie pour former une chambre à air et pour liaison auxdites joues de maintien ; et
on cuit ledit uréthane relativement tendre.

14. Procédé de fabrication d'une roue (2, 123, 190) de patin selon la revendication 13, dans lequel :
ladite vessie est choisie remplie d'un gaz expansible ;
ladite étape de chauffe comprend le chauffage dudit uréthane tendre à une température suffisamment élevée pour, lors du contact avec ladite vessie, pendant ladite étape de cuisson, chauffer ledit gaz pour expanser ledit gaz à l'intérieur de ladite vessie jusqu'à un volume faisant que ladite vessie se dilate fortement et se fixe solidement dans ladite base creuse.

15. Procédé de fabrication d'une roue (2, 123, 190) de patin selon la revendication 13, dans lequel :
ladite étape de chauffe inclut le chauffage dudit uréthane tendre à une température de sensiblement 140 °C, de façon que, lors du contact avec ledit moyeu à température ambiante, une liaison incassable se forme entre ledit moyeu, ledit pneu et ladite vessie, pendant ladite étape de cuisson, pour former un module d'une seule pièce.

16. Procédé de fabrication d'une roue (2, 123, 190) de patin selon la revendication 13, dans lequel :
on choisit ladite vessie à partir d'un matériau imperméable à l'air et on la remplit d'air jusqu'à une pression égale à la pression ambiante.

17. Procédé de fabrication d'une roue (2, 123, 190) de patin selon la revendication 13, incluant en outre les étapes, dans lesquelles :
on place une broche de moule dans ledit moule, du type faisant saillie axialement vers l'intérieur en direction du centre de ladite cavité, pour conserver un trou dans ledit uréthane tendre pendant ladite étape de cuisson ;
on choisit une valve tubulaire souple du type comportant un col d'étanchéité ; et
après ladite étape de cuisson, on introduit ladite valve dans ledit trou axial de sorte que ledit col d'étanchéité se ferme comme résultat des forces compressives extérieures appliquées par l'uréthane de carcasse de pneu.
